# EUROPEAN PATENT SPECIFICATION

(11) **EP 1 412 441 B1**
(45) Date of publication and mention of the grant of the patent: **14.09.2005**
(21) Application number: 02751134.4
(22) Date of filing: 11.07.2002
(51) Int. Cl.: C09D 11/10, C09D 11/00

(54) **RADIATION CURABLE POLYMERIC INK COMPOSITIONS**
STRAHLENHÄRTBARE POLYMERE TINTENZUSAMMENSETZUNG
COMPOSITIONS D'ENCRE POLYMERES DURCISSABLES PAR RAYONNEMENT

(30) Priority: 20.07.2001 EP 01117586
(43) Date of publication of application: 28.04.2004
(73) Proprietor: SURFACE SPECIALTIES, S.A., 1070 Bruxelles (BE)
(72) Inventor: TIELEMANS, Michel, B-1780 Wemmel (BE); BONTINCK, Dirk, B-9940 Ertvelde (BE); RENARD, Vincent, B-5190 Spy (BE)
(74) Representative: Destryker, Elise Martine
(86) International application number: PCT/EP2002/007745
(87) International publication number: WO 2003/010250

(56) References cited:
- EP-A- 0 769 509
- WO-A-00/31189
- US-A- 5 786 410
- US-A- 6 040 005

## Description

The present invention relates to aqueous ink compositions comprising colored polyurethanes which can be cured or crosslinked by UV-irradiation or electron beam and more particular to aqueous ink compositions which can be crosslinked to yield a three-dimensional network after or during being applied to an appropriate substrate.

Water-based inks represent a growing market due to environmental pressure. Traditionally, such inks are made from the blend of a water-based polymeric binder (typically an acrylic latex made from emulsion polymerization) and a pigment dispersion in water obtained from the high shear grinding of the pigments with the tensio-active additive (dispersant and/or surfactant).

Furthermore, water-based inks are known which do not contain a pigment but contain a colorant instead. Such inks are particularly useful for ink jet applications, because inkjet printers require ink having a low viscosity and a low particle size. However, such inks must exhibit water-, solvent- and light-fastness as well as thermostability. Clogging of the jetting channels as a result of pigment floculation, dye crystallization or water evaporation resulting in polymer drying at the nozzles should be avoided.

Recently, aqueous ink compositions have been developed which contain polymers on which the colorants are covalently bonded. In particular, polyurethane oligomers and polyurethane polymers which contain covalently bonded colorants have been developed and are used for this purpose. Corresponding colored polymers and/or ink compositions containing them are disclosed e.g. in US-A 5,700,851, US-A 5,864,002, US-A 5,786,410, US-A 5,919,846, US-A 5,886,091 and EP-A 0 992 533.

US-A 6,022,944 discloses colorants which can be blended uniformly into a variety of thermoplastic or thermosetting resins. However, radiation curable polyurethane polymers, on which a colorant is covalently bonded, are not disclosed in this document.

WO 00/31189 discloses solvent-free energy-curable inks including both a pigment and a colored rheological additive. This document does not disclose a radiation curable polyurethane dispersion on which a colorant is covalently bonded.

It is known by those skilled in the art that waterborne ink formulations derived from a polymer dispersion in water easily form a continuous film if the temperature is above the minimum film formation temperature (MFFT). This phenomenon corresponds to the irreversible drying of the polymer composition that causes lot of troubles during the application of the ink by conventional techniques like flexography and heliography. It is even worse in the case of inkjet inks that block the nozzles of the print heads upon drying and interrupt the printing process. To circumvent these serious problems of productivity and releability, the ink must exhibit a particular behaviour often referred to as "ressolubility", meaning that ink will not dry and hinder the printing process. An improved ressolubility of the polymer is obtained with a sufficiently hydrophilic character associated with a low molecular weight. As a direct consequence, these polumers naturally show a worse water and solvent fastness. The crosslinking of the polymer was found to be a good manner to associate at the same time good ressolubility and fastness of the ink.

This object is solved by aqueous ink compositions as defined in the claims.

The aqueous ink compositions of the present invention contain a polyurethane polymer to which at least one colorant is covalently bonded. The ink composition can be crosslinked to form a three-dimensional network in which the polyurethane polymer and thus also the colorant are covalently bonded. During application or preferably after application of the ink composition on a substrate, the ink composition is treated with a radiation in order to initiate the crosslinking reaction. In this case, the polyurethane polymer contains an unsaturated functionality which allows the crosslinking of the polymer upon irradiation through a free radical polymerisation. The crosslinkability of the colored polyurethane polymer can still be ameliorated by covalent inclusion of one or more additional functionality to the colored polymer, or one or more external crosslinking agents present in the aqueous ink composition, and which facilitates the crosslinking of the polyurethane polymer with a dual cure.

The inventors have found that an ink composition as disclosed in this specification after application and crosslinking has good optical properties, such as light-fastness & color development, together with superior physical properties, such as water-fastness, solvent-fastness, rubbing and scratching resistance. Cross-linking results in a network that is three-dimensional in principle. Thus, there is a covalent attachment of the colorants to the polymeric matrix. The colorants cannot escape from the matrix without the cleavage of chemical bonds. Cross-linking and curing takes place preferably during or after the ink has been applied to the substrate and generally is a free radical or cationic process which is initiated by a radiation such as UV-irradiation or electron beam.

The aqueous ink compositions of the present invention are based on a dispersion of a polyurethane polymer that is preferably in aqueous medium, preferably water. In a preferred embodiment, the polyurethane polymer is obtained from a polyurethane prepolymer which is the reaction product of
(i) at least one organic compound containing at least two reactive groups which can react with isocyanates,
(ii) at least one polyisocyanate,
(iii) at least one reactive colorant having at least one reactive group capable of reacting with (i) or (ii) and
(iv) at least one compound which is capable to react with (I) or (ii) and which may contain additional functional groups which are susceptible to a crosslinking reaction.

The polyurethane prepolymer generally contains terminal free isocyanate groups, because the polyisocyanate is used in excess, and can be further reacted with a capping agent which contains an additional functionality which can be crosslinked. Particularly suitable compounds for this invention are those capping agents that have an acrylic, methacrylic or allylic functionality capable of crosslinking under irradiation with UV light or electron beam.

In another embodiment, the polyurethane polymer is obtained from the reaction of the above polyurethane prepolymer partially reacted with a chain extender.

The dispersion can also contains an initiator for radical or cationic polymerization (the crosslinking process). Additionally, non-polymeric additives used in the art can be present and such additives are e.g. biocides, antioxidants, UV-stabilizers, wetting agents, humectants, foam control agents, waxes, thickening agents, leveling agents, coalescing agents, plasticizers, surfactants, etc. The initiator is particularly preferred to start crosslinking by UV-irradiation but is not necessary for electron beam crosslinking.

The polyisocyanate used according to the present invention for the preparation of the polyurethane prepolymer (compound ii) may be an aliphatic, cycloaliphatic aromatic or heterocyclic polyisocyanate or a combination thereof. As example for suitable aliphatic diisocyanates there may be mentioned 1,4-diisocyanatobutane, 1.6-diisocyanatohexane, 1,6-diisocyanato-2,2,4-trimethylhexane, and 1,12-diisocyanatododecane either alone or in combination. Particularly suitable cycloaliphatic diisocyanates include 1,3- and 1,4-diisocyanatocyclohexane, 2,4-diisocyanato-1-methyl-cyclohexane, 1,3-diisocyanato-2-methylcycloheacane, 1-isocyanato-2-(isocyanatometyl)-cyclopentane, 1,1'-methylenbis(4-isocyanatocyclohexane], 1,1'-(1-methylethylidene)bis[4-isocyanato-cyclohexane], 5-isocyanato-1-isocyanatomethyl-1,3,3-trimethylcyclohexane (isophorone diisocyanate), 1,3- and 1,4-bis(isocyanatomethyl)cyclohexane, 1,1'-methylene-bis[4-isocyanato-3-methylcyclohexane], 1-isocyanato-4(or 3)-isocyanatomethyl-1-methylcyclohexane either alone or in combination. Particularly suitable aromatic diisocyanates comprise 1,4-diisocyanatobenzene, 1,1'-methylenebis[4-isocyariatobenzene], 2,4-diisocyanato-1-mthylethylidene)bis[4-isocyanatobenzene], 1,3- and 1,4-bis[1-isocyanato-1-methylethyl)benzene, either alone or in combination. Aromatic polyisocyanates containing 3 or more isocyanate groups may also be used such as 1,1',1"-methylidynetris[4-isocyanatobenzene] and polyphenyl polymethylene polyisocyanates obtained by phosgenation of aniline/formaldehyde condensates.

The total amount of the organic polyisocyanate is not particularly restricted, but generally is in the range from 10 to 60wt% of the polyurethane polymer, preferably from 20 to 50wt% and more preferably from 30 to 40wt%.

In a preferred embodiment said polyisocyanate is selected from cycloaliphatic polyisocyanates, especially preferred is the use of methylene-bis(cyclohexyl isocyanate).

The organic compounds containing at least two reactive groups which can react with isocyanates (compound i) are preferably polyols, but e.g. amines can also be used.

Suitable examples are polyester polyols, polyether polyols, polycarbonate polyols, polyacetal polyols, polyesteramide polyols, polyacrylate polyols, polythioether polyols and combinations thereof. Preferred are the polyester polyols, polyether polyols and polycarbonate polyols. These organic compounds containing at least two reactive groups which are enabled to react with isocyanates, preferably have a number average molecular weight within the range of 400 to 5,000.

Polyester polyols are particularly preferred and suitable polyester polyols which may be used comprise the hydroxyl-terminated reaction products of polyhydric, preferably dihydric alcohols (to which trihydric alcohols may be added) with polycarboxylic, preferably dicarboxylic acids or their corresponding carboxylic acid anhydrides. Polyester polyols obtained by the ring opening polymerization of lactones may also be used.

The polycarboxylic acids which may be used for the formation of these polyester polyols may be aliphatic, cycloaliphatic, aromatic and/or heterocyclic and they may be substituted (e.g. by halogen atoms) and saturated or unsaturated. As examples of aliphatic dicarboxylic acids, there may be mentioned, succinic acid, glutaric acid, adipic acid, suberic acid, azelaic acid, sebacic acid and dodecanedicarboxylic acid. As an example of a cycloaliphatic dicarboxylic acid, there may be mentioned hexahydrophthalic acid. Examples of aromatic dicarboxylic acids include isophthalic acid, terephthalic acid, ortho-phthalic acid, tetrachlorophthalic acids and 1,5-naphthalenedicarboxylic acid. Among the unsaturated aliphatic dicarboxylic acids which may be used, there may be mentioned fumaric acid, maleic acid, itaconic acid, citraconic acid, mesaconic acid and tetrahydrophthalic acid. Examples of tri- and tetracarboxylic acids include trimellitic acid, trimesic acid and pyromellitic acid.

The polyhydric alcohols which are preferably used for the preparation of the polyester polyols include ethylene glycol, propylene glycol, 1,3-propanediol, 1,3-butanediol, 1,4-butanediol, 1,5-pentanediol, 1,6-hexanediol, neopentyl glycol, diethylene glycol, dipropylene glycol, triethylene glycol, tetraethylene glycol, dibutylene glycol, 2-methyl-1,3-pentanediol, 2,2,4-trimethyl-1,3-pentanediol, 1,4-cyclohexanedimethanol, ethylene oxide adducts or propylene oxide adducts of bisphenol A or hydrogenated-bisphenol A. Triols or tetraols such as trimethylolethane, trimethylolpropane, glycerin and pentaerythritol may also be used. These polyhydric alcohols are generally used to prepare the polyester polyols by polycondensation with the above-mentioned polycarboxylic acids, but according to a particular embodiment they can also be added as such to the polyurethane prepolymer reaction mixture.

In a preferred embodiment the polyester polyol is made from the polycondensation of neopentylglycol and adipic acid. The polyester polyol may also contain an air-drying component such as a long chain unsaturated fatty acid.

Suitable polyether polyols comprise polyethylene glycols, polypropylene glycols and polytetramethylene glycols, or bloc copolymers theirof.

Suitable polycarbonate polyols which may be used include the reaction products of diols such as 1,3-propanediol, 1,4-butanediol, 1,6-hexanediol, diethylene glycol, triethylene glycol or tetraethylene glycol with phosgene, with diarylcarbonates such as diphenylcarbonate or with cyclic carbonates such as ethylene and/or propylene carbonate.

Suitable polyacetal polyols which may be used include those prepared by reacting glycols such as diethyleneglycol with formaldehyde. Suitable polyacetals may also be prepared by polymerizing cyclic acetals.

The total amount of these organic compounds containing at least two reactive groups which can react with isocyanates preferably ranges from 30 to 90wt% of the polyurethane polymer, more preferably of from 45 to 65wt%.

The at least one reactive colorant containing at least one, preferably two or more reactive groups capable of reacting with isocyanates (compound iii) is preferably chosen from Milliken's reactive colorants REACTINT YELLOW X15, REACTINT BLUE X17AB, REACTINT ORANGE X96, REACTINT RED X64, REACTINT VIOLET X8OLT and REACTINT BLACK X41LV. Suitable colorants are disclosed e.g. in US-A 4,284,729, US-A 4,507,407, US-A 4,751,254, US-A 4,761,502, US-A 4,775,748, US-A 4,846,846, US-A 4,912,203, US-A 4,113,721 and US-A 5,864,002. Preferred are the colorants disclosed in US-A 5,864,002. Insofar as the definition and methods for producing the colorants are concerned, it is explicitly referred to the above documents. Preferably colorants are used which are sufficiently stable against UV-irradiation or electron beam.

Numerous anthraquinone derivatives, such as the polyhydroxy-anthraquinones used in WO 02/12400 and WO 02/12401 as intermediate for making UV curable vinyl-anthaquinones, may also be used according to the invention by reacting them with polyisocyanates. These polyhydroxy-anthraquinones are disclosed in US 4.267.306, US 4.359.570, US 4.403.092, US 4.804.719, US4.999.418. US 5.032.670, US 5.194.463, US 5.372.864, US 5.955.560 and US 5.962.557.

In another embodiment, the compound (iii) may be used as a polyol constituent of above mentioned polyesters and polycarbonates which can themselves be components of the polyurethane polymer. Polycarboxy-anthraquinones can also be used as constituent of above mentioned polyesters. Such polycarboxy-anthraquinones are also used in WO 02/12400 and WO 02/12401 as intermediate for making UV curable vinyl-anthaquinones. These polycarboxy-anthraquinones are disclosed in US 4.359.570, US 4.403.092, US4.804.719, US 4.999.418, US 5.372.864, US 5.955.560, US 5.962.557 and WO 98/23690.

In still another embodiment, the at least one organic compound containing at least two reactive groups which can react with isocyanates (compound i) can be identical with the at least one reactive colorant having at least one nucleophilic functionality capable of reacting with isocyanates (compound iii) but, of course, an additional compound (I) may also be used.

The colorant is preferably used in a weight ratio of 1 to 40wt% based on the total polyurethane polymer, more preferably from 5 to 20wt%.

The compound which is capable to react with (i) or (ii) and which contains additional functional groups (compound iv) is preferably a polyol having pendant functionality that can exhibit an ionic or non-ionic hydrophilic nature. Preferably, the polyol has functional groups such as anionic salt groups or acid groups or similar precursors which may be subsequently converted to such anionic salt groups, such as carboxylic or sulfonic acid groups. It is also possible that the polyol comprises other functional groups which are susceptible to a crosslinking reaction, such as isocyanate, hydroxy, amine, acrylic, allylic, vinyl, alkenyl, alkinyl, halogen, epoxy, aziridine, aldehyde, ketone, anhydride, carbonate, silane, acetoacetoxy, carbodiimide, ureidoalkyl, N-methylolamine, N-methylolamide N-alkoxy-methyl-amine, N-alkohy-methyl-amide, or the like.

Particularly preferred polyols comprising functional groups which are susceptible to a crosslinking reaction are those which comprise the acrylic or methacrylic functionalities, in order to allow radical crosslinking initiated by UV light or electron beam.

Compounds which are capable of reacting with (i) or (ii) and containing anionic salt groups (or acid groups which may be subsequently converted to such anionic salt groups) preferably are the compounds containing the dispersing anionic groups which are necessary to render the polyurethane prepolymer self dispersible in water e.g. carboxylate or sulfonate salt groups. According to the invention, these compounds are preferably used as reactants for the preparation of the isocyanate-terminated polyurethane prepolymer.

The carboxylate salt groups incorporated into the isocyanate-terminated polyurethane prepolymers generally are derived from hydroxycarboxylic acids represented by the general formula (HO)xR(COOH)y, wherein R represents a straight or branched hydrocarbon residue having 1 to 12 carbon atoms, and x and y independently are integers from 1 to 3. Examples of these hydroxycarboxylic acids include citric acid and tartaric acid. The most preferred hydroxycarboxylic acids are the α,α-dimethylolalkanoic acids, wherein x=2 and y=1 in the above general formula, such as for example, the 2,2-dimethylolpropionic acid. The pendant anionic salt group content of the polyurethane polymer may vary within wide limits but should be sufficient to provide the polyurethane with the required degree of water-dispersability and crosslinkability. Typically, the total amount of these anionic salt group-containing compounds in the polyurethane polymer can range from 1 to 25wt% of the polyurethane polymer, preferably from 4 to 10wt%.

The sulfonate salt groups can be introduced in this prepolymer using sulfonated polyesters obtained by the reaction of sulfonated dicarboxylic acids with one or more of the above-mentioned polyhydric alcohols, or by the reaction of sulfonated diols with one or more of the above-mentioned polycarboxylic acids. Suitable examples of sulfonated dicarboxylic acids include 5-(sodiosulfo)-isophthalic acid and sulfoisophthalic acids. Suitable examples of sulfonated diols include sodiosulfohydroquinone and 2-(sodiosulfo)-1,4-butanediol.

Optionally, the aqueous ink composition of the present invention also contains an external crosslinking agent. The term "crosslinking agent" as used in the present specification is not restrictive and encompasses all kinds of compounds which can react with the polyurethane polymer, preferably with functional groups of the polyurethane polymer to form a three-dimensional network. Suitable crosslinking agents are known in the prior art, e.g. polyfunctional molecules having reactive functionalities including carboxylic and sulfonic acids, isocyanates, hydroxy, amine, acrylic, allylic, vinyl, alkenyl, alkinyl, halogen, epoxy, aziridine, aldehyde, ketone, anhydride, carbonate, silane, acetoacetoxy, carbodiimide, ureidoalkyl, N-methylolamine, N-methylolamide N-alkoxy-methyl-amine, N-alkoxy-methyl-amide, or the like. These other crosslinking agents may be present in the aqueous ink composition alone or in combination with one another, or can be beared by an additional vinyl-type polymer as discussed above. The term "vinyl type" polymer as used in the present specification is not specifically restricted and should encompass all types of polymers obtainable by polymerisation, preferably by free radical polymerisation of a vinyl-type monomer. Which crosslinking agent should be used depends on the type of crosslinkable functionality in the polyurethane polymer and the crosslinking agent can be chosen by a skilled person accordingly.

Polyurethane polymers are generally produced by first preparing a polyurethane prepolymer made by reacting polyisocyanates with an organic compound containing at least two reactive groups which can react with isocyanates, generally a polyol.
Reaction is carried out with excess of polyisocyanate, so that the prepolymer contains free isocyanate end groups which are then capped or extended, and wherein the capping agent is a well known agent used to inactivate the terminal isocyanate groups. The capping agent can e.g. be water or a usual chain extender.

The chain extender should carry active hydrogen atoms which react with the terminal isocyanate groups of the polyurethane prepolymer. The chain extender is suitably a water-soluble aliphatic, alicyclic, aromatic or heterocyclic primary or secondary polyamine having up to 80, preferably up to 12 carbon atoms.

When the chain extension of the polyurethane prepolymer is effected with a polyamine, the total amount of polyamine should be calculated according to the amount of isocyanate groups present in the polyurethane prepolymer in order to obtain a fully reacted polyurethane polymer (a polyurethane urea) with no residual free isocyanate groups; the polyamine used in this case may have an average functionality of 2 to 4, preferably 2 to 3.

In a preferred embodiment the chain extender is selected from aliphatic diamines, preferably it is 1,5-diamino-2-methyl-pentane.

The degree of non-linearity of the polyurethane polymer is controlled by the functionality of the polyamine used for the chain extension. The desired functionality can be achieved by mixing polyamines with different amine functionalities. For example, a functionality of 2.5 may be achieved by using equimolar mixtures of diamines and triamines.

Examples of such chain extenders useful herein comprise hydrazine, ethylene diamine, piperazine, diethylene triamine, triethylene tetramine, tetraethylene pentamine, pentaethylene hexamine, N,N,N-tris(2-aminoethyl)amine, N-(2-piperazinoethyl)ethylenediamine, N,N'-bis(2-aminoethyl)piperazine, N,N,N'-tris(2-aminoethyl)ethylenediamine, N-[N-(2-amlnoethyl)-2-aminoethyl]-N'-(2-aminoethyl)piperazine, N-(2-aminoethyl)-N'-(2-piperazinoethyl)ethylenediamine, N,N-bis(2-aminoethyl)-N-(2-piperazinoethyl)amine, N,N-bis(2-piperazinoethyl)amine, guanidine, melamine, N-(2-aminoethyl)-1,3-propanediamine, 3,3'-diaminobenzidine 2,4,6-triaminopyrimidine, dipropylenetriamine, tetrapropylenepentamine, tripropylenetetramine, N,N-bis(6-aminohexyl)amine, N,N'-bis(3-aminopropyl)ethylenediamine, 2,4-bis(4'-aminobenzyl)aniline, 1,4-butanediamine, 1,6-hexanediamine, 1,8-octanediamine, 1,10-decanediamine, 2-methylpentamethylenediamine, 1,12-dodecanediamine, isophorone dismine (or 1-amino3-aminomethyl-3,5,5-trimethyl-cyclohexane), bis(4-aminocyclohexyl)methane [or bis(aminocyclohexane-4-yl)-methane], and bis(4-amino-3-methylcyclohexyl)methane [or bis(amino-2-methylcyclohexane-4-yl)methane], polyethylene amines, polyoxyethylene amines and/or polyoxypropylene amines (e.g. Jeffamines from TEXACO).

If the functional group which is susceptible to water dispersion is a sulfonate group, it can be incorporated into the polyurethane polymer by a chain extension using sulfonated diamines like for example the sodium salt of 2,4-diamino-5-methylbenzenesulfonic acid or the alpha,omega-polypropyleneglycoldiaminesulfopropyl acid.

The total amount of polyamines should be calculated according to the amount of isocyanate groups present in the polyurethane prepolymer. The ratio of isocyanate groups in the prepolymer to active hydrogens in the chain extender during the chain extension may be in the range of from about 1.0:0.7 to about 1.0:1.1, preferably from about 1.0:0.9 to about 1.0:1.02 on an equivalent basis.

The chain extension reaction is generally carried out at a temperature between 5° and 90°C, preferably between 20° to 50°C and most preferably between 10 and 20°C.

In one preferred embodiment of the present invention, the chain extender is a capping agent that contains the same reactive groups as those previously disclosed and which are capable of effecting the crosslinking of the polyurethane polymer during or after application of the aqueous ink composition to the substrate. In this case, it is possible that the prepolymer is prepared by only three components and does not contain the at least one compound which is capable to react with (i) or (ii) and which contains additional functional groups which are susceptible to a crosslinking reaction (compound iv), but, of course, such a compound may in addition also be used for preparing the prepolymer. Furthermore, in the most preferred embodiment, the chain extender can contain an acrylic, methacrylic or allylic functionality capable of crosslinking under radiation with UV light or electron beam. For example, if hydroxyethylacrylate is used as chain extender, the hydroxy group reacts with the free isocyanate groups and the ethylacrylate group is capable of effecting the crosslinking of the polyurethane polymer during or after application on a substrate by irradiation.

Suitable compounds for this purpose are compounds having in their molecule at least one unsaturated function such as acrylic, methacrylic or allylic nature and at least one nucleophilic function capable of reacting with isocyanates. The acrylic functionality is preferred for its higher reactivity. Particularly suitable are the acrylic or methacrylic esters with polyols, in wich at least one hydroxy functionality remains free, like hydroxyalkyl(meth)acrylates having 1 to 20 carbon atoms in the alkyl group and having a linear or branched structure. Examples of monounsaturated compounds are hydroxyethylacrylate, hydroxypropylacrylate or hydroxybutylacrylate and the like. Examples of polyunsaturated compounds are trimethylolpropane diacrylates, glycerol diacrylates, pentaerythritol triacrylate, ditrimethylolpropane triacrylate and their polyethoxylated or polypropoxylated equivalents. Those products that provide a final composition with a non irritant character are preferred.

The acrylated chain terminating agent can be used in such a manner that it is fully converted during the reaction with the available isocyanate groups of the polyurethane prepolymer, i.e. the molar ratio of the said isocyanate groups to the hydroxyl groups is preferably between 1.0 and 2.0. It might be wished for very specific requirements that this ratio is inferior to 1. In particular, it is possible to add non-hydroxylated polyunsaturated compounds that will not react with the isocyanate groups of the prepolymer, and in an excess between 5-50%, preferably between 20-30% based on the weight of the prepolymer to enhance the crosslinking density of the polymer after irradiation.

It is known to those skilled in the art that acrylation of polyols such as trimethylolpropane and pentaerythritol proceeds to a mixture of monoacrylate, diacrylate, triacrylate and tetraacrylate (when applicable) and that a possible way to characterize the mixture is by measuring its hydroxyl value. In order to modify the respective proportions of the various acrylates formed, it is known to modify reaction parameters such as temperature, nature and amount of reaction catalyst, amount of acrylic acid, etc. For the purpose of using the mixture of acrylates derived from the acrylation of pentaerythritol as chain-capping agent for the polyurethane polymer of the invention, it is preferable to select the hydroxyl value in the range of 50-250 mg KOH/g, preferably 80-150 mg KOH/g. Reason for such a selection is that when the hydroxyl value is low, then the proportion of pentaerythritol tetraacrylate in the mixture is too high and tends to be detrimental to the flexibility of the cured coating resulting from the aqueous dispersion of the invention.

Any acid functionality which may be present in the polyurethane prepolymer can be converted to anionic salt groups by neutralization of said groups, before or simultaneously with the preparation of an aqueous dispersion of this prepolymer. The dispersion process of the polyurethane prepolymer is well known to those skilled in the art, and usually requires rapid mixing with a high shear rate type mixing head. Preferably, the polyurethane prepolymer is added to the water under vigorous agitation or, alternatively, water may be stirred into the prepolymer. A preferable process is disclosed e.g. in US-A 5,541,251 to which it is referred for details.

Suitable neutralizing or quaternizing agents for converting the above mentioned acid groups into anionic salt groups during or before the dispersion in water of the polyurethane prepolymers bearing terminal isocyanate groups can be volatile organic bases and/or non-volatile bases. Volatile organic bases are those whereof at least about 90% volatilize during film formation under ambient conditions, whereas non-volatile bases are those whereof at least about 95% do not volatilize during film formation under ambient conditions.

Suitable volatile organic bases can preferably be selected from the group comprising ammonia, trimethylamine, triethylamine, triisopropylamine, tributylamine, N,N-dimethylcyclohexylamine, N,N-dimethylaniline, N-methylmorpholine, N-methylpiperazine, N-methylpyrrolidine and N-methylpiperidine. The trialkylamines are preferred.

Suitable non-volatile bases include those comprising monovalent metals, preferably alkali metals such as lithium, sodium and potassium. These nonvolatile bases may be used in the form of inorganic or organic salts, preferably salts wherein the anions do not remain in the dispersions such as hydrides, hydroxides, carbonates and bicarbonates.

Triethylamine is the most preferred neutralizing agent.

The total amount of these neutralizing agents should be calculated according to the total amount of acid groups to be neutralized. To ensure that all acid groups are neutralized in the case volatile organic bases are used, it is advisable to add the neutralizing agent in an excess of 5 to 30wt%, preferably 10 to 20wt%.

The compositions of the present invention preferably contain an initiator, called a photoinitiator, which starts the crosslinking reaction upon exposure to UV-irradiation. The preferred photo- initiator of the present invention is a photoinitiator for radical or cationic polymerization. The photoinitiator is preferably used in a concentration from 0.1 to 10% d/d.

Photoinitiators which may be used according to the present invention are selected from those conventionally used for this purpose. Suitable photoinitiators include (not limitative) aromatic carbonyl compounds such as benzophenone and its alkyl or halogen derivatives, anthraquinone and its derivatives, thioxanthone and its derivatives, benzoin ethers, aromatic or non-aromatic alpha-diones, benzyl dialkylketals and acetophenone derivatives.

Suitable photoinitiators are, for example, acetophenone, propiophenone, 2-phenylacetophenone, 2-chloro-2-phenyl-acetophenone, 2,2-dichloro-2-phenyl-aceophenone, 2-butyloxy-2-phenyl-acetophenone, 2,2-dimethoxy-2-phenyl-acetophenone, 2,2-diethoxy-acetophenone, 2-methylol-2-methoxy-2-phenyl-acetophenone, benzophenone, 4-trichloromethylbenzophenone, indenone, 1,3-indanedione, fluorenone, xanthone, thioxanthone, 2-chlorothioxanthone, anthraquinone, 2-ethylanthraquinone, biacetyl, glyoxal, 1,2-indanedione, p-chlorophenyl-glyoxal, benzil, camphoquinone, benzoin methyl and ethyl ethers, and the like.

The photoinitiating action of the photoinitiator is, in some cases, considerably improved by tertiary amines characterized in that they have at least one hydrogen atom on the carbon atom adjacent to the nitrogen atom. Suitable tertiary amine are: trimethylamine, triethanolamine, N-methyl-diethanolamine, N-N-dimethylethanolamine, N,N-dimethylstearylamine, N,N-dimethylaniline, N,N-di(2-hydroxyethyl)aniline or aminoacrylates such as the addition product of a secondary amine such as dimethylamine, diethylamine, diethanolamine, etc., with a polyol acrylate such as trimethylolpropane diacrylate, etc.

It can be advantageous in certain cases to associate, in the same molecule, the tertiary amine function having at least one hydrogen atom on at least one carbon atom adjacent to the nitrogen atom, with the aromatic ketone function, such as, in for example: 2-isopropyloxy-2-(4-dimethylaminophenyl)propiophenone, 4-dimethylaminobenzophenone, 4,4'-bis(dimethylamino)benzophenone, 2-diethylamino-9-fluorenone, 7-diethylamino-4-methylcoumarin, N-methylacridone, and the like. Similarly, it is possible to associate in the same molecule the tertiary amine function, having at least one hydrogen atom on at least one carbon atom adjacent to the nitrogen atom; with at least one acrylic or methacrylic radical, such as in, for example: the mono-, di- and triacrylates or methacrylates of triethanolamine, of N-methyldiethanolamine, of N,N-dimethylethanolamine or of N,N-di(2-hydroxyethyl)aniline.

For curing the compositions according to the invention by an accelerated electron beam, it is not necessary to use a photoinitiator, since this type of radiation produces by itself a sufficient quantity of energy to produce free radicals and to ensure that curing is extremely rapid.

If desired, the compositions of the present invention may include other auxiliary substances (additives) which may be added to the final composition in order to impart or improve desirable properties or to suppress undesirable properties. These additives include known biocides (e.g. Acticide AS), antioxidants (e.g. Irganox 245), plasticizers (e.g. dioctyl phtalate), pigments, silica sols (e.g. Acemat TS100), leveling agents (i.e. Byk 306), wetting agents (e.g. Byk 346), humectants (e.g. ethylene glycol, 2-pyrrolidinone, 2-methyl-2,4-pentanediol), foam control agents (e.g. Dehydron 1293), thickening agents (e.g. Tylose MH6000), coalescing agents (e.g. Texanol), heat stabilizers, UV-light stabilizers (e.g. Tinuvin 328 or 622), transorbers (such as described in US 5,643,356), etc. The composition may also be blended with other polymer dispersions, for example, with polyvinyl acetate, epoxy resins, polyethylene, polystyrene, polybutadiene, polyvinyl chloride, polyacrylate and other homopolymer and copolymer dispersions.

The preparation of the polyurethane prepolymer bearing terminal isocyanate moieties can be carried out in conventional manner, by reacting a stoichiometric excess of the organic polyisocyanate(s) with the organic compound(s) containing at least two reactive groups which are enabled to react with isocyanate groups and the other reactive compound(s) which can react with isocyanates under substantially anhydrous conditions, preferably at a temperature between 50°C and 120°C., more preferably between 70°C and 95°C., until the reaction between the isocyanate groups and the reactive groups is substantially complete: This reaction may be facilitated by the addition of 5 to 40wt%, preferably 10 to 20wt% of a solvent, in order to reduce the viscosity of the prepolymer if this would appear to be necessary. Suitable solvents; either alone or in combination, are those which are non-reactive with isocyanate groups such as ketones, esters and amides such as N,N-dimethylformamide, N-cyclohexylpyrrolidine and N-methylpyrtolidone. The preferred solvents are the ketones and esters with a relatively low boiling point so that they can easily be removed before, during or after the chain extension by distillation under reduced pressure. Examples of such solvents include acetone, methyl ethyl ketone, diisopropyl ketone, methyl isobutyl ketone, methyl acetate and ethyl acetate.

In a preferred embodiment acetone is used as a solvent and stripped out under vacuum after the water dispersion step.

If desired, the preparation of the isocyanate-terminated polyurethane prepolymer may be carried out in the presence of any of the known catalysts suitable for polyurethane preparation such as amines and organometallic compounds. Examples of these catalysts include triethylenediamine, N-ethyl-morpholine, triethylamine, dibutyltin dilaurate, stannous octanoate, dioctyltin diacetate, lead octanoate, stannous oleate, dibutyltin oxide and the like.

During the preparation of the isocyanate-terminated polyurethane prepolymer the reactants are generally used in proportions corresponding to a ratio of isocyanate groups to such groups which are enabled to react with the isocyanate functionalities of from about 1.1:1 to about 4:1, preferably from about 1.3:1 to 2:1.

The isocyanate-terminated polyurethane prepolymer is subjected to the capping with one or several organic compounds containing at least one reactive group which can react with isocyanates and at least one functionality capable of crosslinking under UV light or electron beam. This last functionality is preferably an acrylic, methacrylic or allylic functionality. The capping is realized so that 20-100%, preferably 50-100% of the isocyanate groups are being reacted through the capping.

The aqueous ink composition containing a polyurethane polymer is preferably prepared by dispersing the polyurethane polymer solution in an aqueous medium such as water. Thus, in a preferred embodiment the polyurethane is first prepared from the polyurethane prepolymer by end-capping the terminal isocyanate groups and then the polyurethane polymer is dispersed by known methods into the aqueous medium.

Alternatively, water can be dispersed into the polyurethane prepolymer solution, until water becomes a continuous phase. To this aqueous dispersion of the polyurethane prepolymer, the chain extender can be added to form the polyurethane polymer.

Localized amine concentration gradients are preferably avoided by previously forming an aqueous solution of the polyamine and adding slowly this solution to the polyurethane prepolymer dispersion. Then the solvent can be removed by distillation under vacuum to form a pure aqueous dispersion of the polyurethane prepolymer.

If the functional groups which are susceptible to a crosslinking reaction and which are present in the polyurethane polymer or prepolymer are acidic groups which should be transferred to anionic groups, it is preferable that the neutralizing reaction of the acidic groups is effected before the polyurethane polymer or prepolymer is dispersed into the aqueous medium. However, it is also possible that the aqueous medium into which the polyurethane polymer is dispersed contains the neutralizing agent.

The crosslinking agent, the optional photoinitiator and optional auxiliary substances or additives are included into the aqueous dispersion in a known manner.

The aqueous ink compositions suitably have a total solids content of from about 5 to 65wt%, preferably from about 30 to 50wt%, more preferably from 30 to 35wt%; a viscosity measured at 25°C of 50 to 5000 mPa s, preferably 100 to 500 mPa s, a pH value of 7 to 11, preferably of 8 to 9 and an average particle size of about 10 to 1000 nm, preferably 30 to 300 nm, more preferably 50 to 100 nm.

The film formation temperature may preferably range from 0 to 70°C, more preferably from 0 to 20°C.

This aqueous ink composition can be easily applied to any substrate including paper, cardboard, plastics, fabrics, glass, glass fibers, ceramics, concrete, leather, wood, metals and the like, for industrial or domestic purposes and by any conventional method including flexography or heliography, or eventually brushing, spraying and dipping.

The aqueous ink composition according to the current invention is preferably used in an ink-jet printer. Other known application techniques can also be used, such as in-mould decorations, etc.

After having been applied to the substrate, the deposited coatings are cured by irradiation curing by UV-light or electron beam. Preferably UV-light (80 W/cm or 120 W/cm) or electron beam (e.g. 50 kGy, 250 kv) are used for curing. The cured coatings obtained thereby exhibit excellent adhesion, outstanding water and solvent resistance, mechanical strength, durability, flexibility and deep color.

Color matching can easily be obtained by blending the colored ink compositions in the appropriate manner; it is worth to mention that color matching can also be achieved by blending the colored reactive raw materials to use them as building blocks for the manufacture of the desired colored polymer.

Although the aqueous inks of the invention exhibit good color intensity, they can be mixed with pigment dispersions in order to correct or improve the color definition, depth or durability.

It is possible to prepare different aqueous resin compositions according to the invention by making a judicious combination of the starting materials, thus allowing the chemical, physical and technological properties of said compositions to be modified as desired, in order to adjust them to their future applications. It is shown in detail in the examples.

### Examples

The isocyanate content in a prepolymer reaction mixture was measured using the dibutylamine back-titration method.

The viscosity η of the aqueous polymer dispersions was measured at 25°C with a Brookfield RVT Viscometer, using spindle No. 1 at 50 rpm when the viscosity was under 200 mPa s or spindle No. 2 at 50 rpm when the viscosity was higher than 200 mPa s.

The grits value was the amount of residue from the polymer dispersion filtered on a 50 micron sieve, and expressed in mg/liter.

The average particle size of the aqueous polymer dispersions was measured by laser light scattering using a Malvern Particle Analyzer Processor types 7027 & 4600SM.

All measurements on the final coatings were carried out on coating lines prepared with a drawing pen or a Meyer bar in order to obtain the appropriate thickness.

The adhesion was measured using an adhesive tape pressed on the coating and removed rapidly; the damage on the coating was expressed using a 1-5 scale (5=excellent).

The solvent resistance and the water resistance of the coatings were evaluated in the given conditions by the use of double rubs with a piece of cotton rag saturated with isopropanol (IPA in TABLE 1), acetone or water until the film fell (i.e. is showing through). One rub was equal to a forward and backward stroke. The reported number was the number of rubs required to break through the coating.

The scratch resistance was assessed using the nail passing with a hack & forth motion on the coating; the damage on the coating was ranked using a 1-5 scale (5=excellent).

The residual tack, or blocking resistance, was measured by pressing a piece of paper on the coating and assessing the ease to separate the paper without adherence; the adherence is expressed in a scale from 1-5 (5=excellent).
The color fading was assessed by the relative change in color observed during the irradiation step; the color fading was ranked using a 1-5 scale (5=excellent).

### Example 1:

### red-colored polyurethane dispersion with UV-crosslinking.

A double-wall glass reactor equipped with a mechanical stirrer, a thermocouple, a vapor condenser and a dropping funnel was charged with 100.3 g of acetone, 63.0g of a polyester (PanPG 670; average molecular weight -670 Daltons; obtained by the polycondensation of adipic acid and neopentylglycol), 17.6g of dimethylol propionic acid, 35.2g of REACTINT RED X64 (Milliken), 118.3g of methylene bis(cyclohexyl isocyanate) and 0.3g of dibutyltinlaurate as reaction catalyst. 0.8g of the antioxidizing agent Irganox245 and 1.6g each of the UV-stabilizers Tinuvin328 and Tinuvin622 were added. The reaction mixture was heated up to 60°C with stirring, and the condensation process was maintained until the isocyanate content reached 1.00 meq/g. The polyurethane prepolymer was cooled down to 50°C. 0.1g of 4--methoxyphenol in 11.9g of acetone were added as a radical inhibitor, followed by 102.7g of pentaerythritol triacrylate. The reaction mixture was kept at 50°C, and the end-capping process was maintained until the isocyanate content reached 0.30 meq/g. Then, 13.4g of triethylamine were added as neutralizing agent until a homogenous solution was obtained. 634.1g of demineralised water at room temperature were loaded in the reactor, and a stable polymer dispersion was obtained after about 5 minutes of vigorous mixing. 0.3g of Dehydran1293 were added as foam control agent, 1.0g of Acticide AS as biocide and BYK346 as wetting agents. Then the acetone was stripped off the dispersion under vacuum and at a temperature not exceeding 50°C, until the free acetone level fell below 0.15%. The product was filtered over a 100µ sieve to deliver a deeply coloured and stable product. It had a dry content of 35.0%, a viscosity of 50mPa s, a pH of 7.3, a particle size of 40nm and grits content of <100 mg/l.

### Example 2:

the dispersion of example 1 was formulated with Irgacure 500 (1.5% weight, wet/wet). In the table 1 below, the performance of the ink is outlined with/without UV irradiation or electron beam; it was applied on polyethylene using a bar coater in such a way as to obtain a 4-6 microns thickness after water evaporation for 1 minute at 100°C.

The example shows that the composition which contained Irgacure 500 and was exposed to UV-irradiation and the composition which was exposed to electron beam, i.e. the two compositions which were crosslinked, exhibit much better properties than the compositions which were not cured. The color retention was also acceptable.

### Example 3:

the dispersion of Example 1 was formulated with CGI 393 (5% weight, wet/wet) as the photoinitiator. In the table 2, the performance of the ink is outlined for different lamp intensities at different speeds. The ink was applied on polyethylene using a bar coater in such a way as to obtain a 8 microns thickness after water evaporation at 60°C.

**Table 1**

| | 3X 80W/cm | Adhesion (1-5. 5:excellent) | Abrasion (1-5, 5:excellent) | Tack fastness | Water fastness (rubs) | Solvent fastness (rubs IPA) |
|---|---|---|---|---|---|---|
| Example 2 (Irgacure) | - | 5 | 2-3 | Slight | >100 | 1 |
| Example 1 (no Irgacure) | + | 5 | | Very slight | >100 | 2 |
| Example 2 (Irgacure) | + | 5 | 4 | No | >100 | 40 |
| Example 1 (no Irgacure) | 250kV 50kGy | 5 | 4 | No | >100 | 80 |

**Table 2**

| Speed M/min | Lamp intensity W/cm | Color fading 1-5 | Acetone Double rubs | Adhesion |
|---|---|---|---|---|
| 50 | 120 | 4.5 | 6 | 5 |
| 30 | 120 | 4.5 | 30 | 2 |
| 50 | 80 | 4.5 | 3 | 4 |
| Color fading 5: no color fading 3: significant color fading 1: total decoloration | | | | |

## Claims

1. Aqueous ink composition containing a polyurethane polymer bearing a reactive functionality and at least one colorant, wherein the colorant is covalently bonded to the polyurethane polymer, and the composition is crosslinkable to form a network containing the polyurethane polymer, wherein the crosslinking reaction is initiated by irradiation.

2. Aqueous ink composition according to claim 1 wherein the polyurethane polymer is an unsaturated polyurethane polymer prepared from a polyurethane prepolymer, wherein the polyurethane prepolymer is the reaction product of
(i) at least one organic compound containing at least two reactive groups which can react with isocyanates
(ii) at least one polyisocyanate
(iii) at least one reactive colorant having at least one reactive group capable of reacting with (i) or (ii) and
(iv) at least one compound which is capable to react with (i) or (ii) and which contains additional functional groups which are susceptible to a crosslinking reaction.

3. Aqueous ink composition according to claim 2, wherein the group which is susceptible to a crosslinking reaction is an acrylic or methacrylic or allylic group.

4. Aqueous ink composition according to any of claims 1 to 3, additionally containing an external crosslinking agent.

5. Aqueous ink composition according to any of claims 1 to 4, wherein the irradiation is made by UV light or by electron beam.

6. Aqueous ink composition according to any of claims 1 to 5, wherein the colorant is selected from REACTINT YELLOW X15, REACTINT BLUE X17AB, REACTINT ORANGE X96, REACTINT RED X64, REACTINT VIOLET X80LT and REACTINT BLACK X41IV.

7. Aqueous ink composition according to any of claims 1 to 6, wherein the composition has a polymer dry content from 5 to 50%.

8. Aqueous ink composition according to any of claims 1 to 7, wherein the polyurethane polymer is prepared by reacting the polyurethane prepolymer with at least one capping agent having an acrylic, methacrylic or allylic functionality susceptible to provide crosslinking upon irradiation.

9. Aqueous ink composition according to any of claims 1 to 8, wherein the ink composition contains a photo initiator for radical or cationic polymerization.

10. Use of an aqueous ink composition according to any of claims 1 to 9 for coating a substrate by flexography, heliography, brushing, spraying or dipping.

11. Use according to claim 10, wherein the aqueous ink composition is for inkjet applications.

12. Method of coating a substrate, wherein an aqueous ink composition according to any of claims 1 to 9 is applied to the substrate and cured during application after application on the substrate by using UV-irradiation or electron beam.

13. Method according to claim 12, wherein the aqueous ink composition is applied to the substrate by an ink jet printer.

14. Substrate being at least partially coated by a cured aqueous ink composition according to any of claims 1 to 9.

## Patentansprüche

1. Wässrige Druckfarbenzusammensetzung, enthaltend ein Polyurethanpolymer, das eine reaktive Funktionalität und mindestens ein Färbemittel trägt, worin das Färbemittel kovalent an das Polyurethanpolymer gebunden ist, und die Zusammensetzung vernetzbar ist, um ein das Polyurethanpolymer enthaltendes Netzwerk zu bilden, wobei die Vernetzungsreaktion durch Bestrahlung gestartet wird.

2. Wässrige Druckfarbenzusammensetzung nach Anspruch 1, wobei das Polyurethanpolymer ein aus einem Polyurethanprepolymer hergestelltes ungesättigtes Polyurethanpolymer ist, worin das Polyurethanprepolymer das Reaktionsprodukt ist von
(i) mindestens einer mindestens zwei reaktive Gruppen, die mit Isocyanaten reagieren können, enthaltenden organischen Verbindung
(ii) mindestens einem Polyisocyanat
(iii) mindestens einem reaktiven Färbemittel mit mindestens einer reaktiven Gruppe, die mit (i) oder (ii) reagieren kann, und
(iv) mindestens einer Verbindung, die mit (i) oder (ii) reagieren kann, und die weitere funktionelle Gruppen enthält, die für eine Vernetzungsreaktion anfällig sind.

3. Wässrige Druckfarbenzusammensetzung nach Anspruch 2, wobei die Gruppe, die für eine Vernetzungsreaktion anfällig ist, eine Acryl- oder Methacryl- oder Allylgruppe ist.

4. Wässrige Druckfarbenzusammensetzung nach einem der Ansprüche 1 bis 3, zusätzlich enthaltend ein äußeres Vernetzungsmittel.

5. Wässrige Druckfarbenzusammensetzung nach einem der Ansprüche 1 bis 4, wobei die Bestrahlung durch UV-Licht oder durch Elektronenstrahl ausgeführt wird.

6. Wässrige Druckfarbenzusammensetzung nach einem der Ansprüche 1 bis 5, wobei das Färbemittel aus REACTINT YELLOW X15, REACTINT BLUE X17AB, REACTINT ORANGE X96, REACTINT RED X64, REACTINT VIOLET X80LT und REACTINT BLACK X41IV ausgewählt ist.

7. Wässrige Druckfarbenzusammensetzung nach einem der Ansprüche 1 bis 6, wobei die Zusammensetzung einen Polymertrockengehalt von 5 bis 50 % aufweist.

8. Wässrige Druckfarbenzusammensetzung nach einem der Ansprüche 1 bis 7, wobei das Polyurethanpolymer durch Umsetzen des Polyurethanprepolymers mit mindestens einem Verkappungsmittel mit einer Acryl-, Methacryl- oder Allylfunktionalität, die für das Bereitstellen von Vernetzen nach Bestrahlung anfällig ist, hergestellt wird.

9. Wässrige Druckfarbenzusammensetzung nach einem der Ansprüche 1 bis 8, wobei die Druckfarbenzusammensetzung einen Photostarter zur radikalischen oder kationischen Polymerisation enthält.

10. Verwendung einer wässrigen Druckfarbenzusammensetzung nach einem der Ansprüche 1 bis 9 zum Beschichten eines Substrats durch Flexographie, Heliographie, Streichen, Sprühen oder Tauchen.

11. Verwendung nach Anspruch 10, wobei die wässrige Druckfarbenzusammensetzung für Tintenstrahlanwendungen ist.

12. Verfahren zum Beschichten eines Substrats, wobei eine wässrige Druckfarbenzusammensetzung nach einem der Ansprüche 1 bis 9 auf das Substrat aufgetragen und während einer Auftragung oder nach einer Auftragung auf das Substrat durch Verwendung von UV-Strahlung oder Elektronenstrahl gehärtet wird.

13. Verfahren nach Anspruch 12, wobei die wässrige Druckfarbenzusammensetzung durch einen Tintenstrahldrucker auf das Substrat aufgetragen wird.

14. Substrat, das mindestens teilweise mit einer gehärteten wässrigen Druckfarbenzusammensetzung nach einem der Ansprüche 1 bis 9 beschichtet ist.

## Revendications

1. Composition aqueuse d'encre contenant un polymère de polyuréthane portant une fonctionnalité réactive et au moins un colorant, le colorant étant lié par covalence au polymère de polyuréthane et la composition pouvant être réticulée pour former un réseau contenant le polymère de polyuréthane, la réaction de réticulation étant amorcée par exposition à un rayonnement.

2. Composition aqueuse d'encre suivant la revendication 1, dans laquelle le polymère de polyuréthane est un polymère de polyuréthane insaturé préparé à partir d'un prépolymère de polyuréthane, le prépolymère de polyuréthane étant le produit de réaction de
(i) au moins un composé organique contenant au moins deux groupes réactifs, qui peuvent réagir sur des isocyanates
(ii) au moins un polyisiocanate
(iii) au moins un colorant réactif ayant au moins un groupe réactif apte à réagir sur (i) ou (ii), et
(iv) au moins un composé qui est apte à réagir sur (i) ou (ii) et qui contient des groupes fonctionnels supplémentaires qui sont sensibles à une réaction de réticulation.

3. Composition aqueuse d'encre suivant la revendication 2, dans laquelle le groupe qui est sensible à une réaction de réticulation est un groupe acrylique ou méthacrylique ou allylique.

4. Composition aqueuse d'encre suivant l'une quelconque des revendications 1 à 3, contenant, en outre, un agent extérieur de réticulation.

5. Composition aqueuse d'encre suivant l'une quelconque des revendications 1 à 4, dans laquelle l'exposition à un rayonnement est effectuée par de la lumière UV ou par un faisceau d'électrons.

6. Composition aqueuse d'encre suivant l'une quelconque des revendications 1 à 5, dans laquelle le colorant est choisi parmi REACTINT YELLOW X15, REACTINT BLUE X17AB, REACTINT ORANGE X96, REACTINT RED X64, REACTINT VIOLET X80LT, et REACTINT BLACK X4IIV.

7. Composition aqueuse d'encre suivant l'une quelconque des revendications 1 à 6, dans laquelle la composition a une teneur en polymère en matière sèche de 5 à 50%.

8. Composition aqueuse d'encre suivant l'une quelconque des revendications 1 à 7, dans laquelle le polymère de polyuréthane est préparé en faisant réagir le prépolymère de polyuréthane sur au moins un agent de protection ayant une fonctionnalité acrylique, méthacrylique ou allylique apte à donner une réticulation après exposition à un rayonnement.

9. Composition aqueuse d'encre suivant l'une quelconque des revendications 1 à 8, dans laquelle la composition d'encre contient un photoamorceur pour une polymérisation par radical ou pour une polymérisation cationique.

10. Utilisation d'une composition aqueuse d'encre suivant l'une quelconque des revendications 1 à 9, pour revêtir un substrat par flexographie, héliographie, à la brosse, par pulvérisation ou au trempé.

11. Utilisation suivant la revendication 10, dans laquelle la composition aqueuse d'encre est destinée à des applications à jets d'encre.

12. Procédé de revêtement d'un substrat dans lequel on applique une composition aqueuse d'encre suivant l'une quelconque des revendications 1 à 9, au substrat et on la durcit pendant l'application ou après l'application sur le substrat en utilisant une exposition au rayonnement UV ou à un faisceau d'électrons.

13. Procédé suivant la revendication 12, dans lequel on applique la composition aqueuse d'encre au substrat par une imprimante à jets d'encre.

14. Substrat revêtu au moins en partie d'une composition aqueuse d'encre durcie suivant l'une quelconque des revendications 1 à 9.
